# EUROPEAN PATENT APPLICATION

(11) **EP 4 556 699 A1**
(43) Date of publication of application: **21.05.2025**
(21) Application number: 24213103.5
(22) Date of filing: 14.11.2024
(51) Int. Cl.: F02C 6/08, F02C 9/18

(54) **HIGH PERFORMANCE AUXILIARY POWER UNIT WITH TEMPERATURE CONTROLLED BLEED DEVICE**

(30) Priority: 16.11.2023 US 202318511167
(71) Applicant: RTX Corporation, Farmington, CT 06032 (US)
(72) Inventor: Fowler, Robert B., West Palm Beach, 33417 (US); Fabian, John C., Lafayette, 47904 (US); Passarelli, Paolo, Port Saint Lucide, 34953 (US)
(74) Representative: Schmitt-Nilson Schraud Waibel Wohlfrom Patentanwälte Partnerschaft mbB

(57) **Abstract**

An auxiliary power unit air bleed system with an expansion valve including a compressor having a bleed air discharge line; and an expansion valve fluidly coupled to the bleed air discharge line, wherein the expansion valve is configured to reduce a pressure of bleed air flowing through the bleed air discharge line and reduce a temperature of the bleed air.

## Description

The present disclosure is directed to an improved auxiliary power unit air bleed system with expansion valve.

Auxiliary power units use a gas turbine cycle to produce power for electrical generation and pneumatic flow.

The electrical generation and pneumatic flow are employed for aircraft operation. For example, the main engine of the aircraft can utilize the electrical power and pneumatic flow for starting.

However, the pneumatic flow is usually limited by the airframer to avoid having a long hot pneumatic air duct on the aircraft. The temperature limit of the pneumatic air on the aircraft can be less than 500 degrees Fahrenheit (F).

These temperature restrictions then limit the compressor output on the auxiliary power unit to have a compression ratio (CR) so that the temperature of the pneumatic air will stay below the 500 F limit. Typically about a 3.8 to 1 compression ratio is employed.

Having the capability to cool the pneumatic air would enable the use of a higher compression ratio which results in a higher performing machine.

In accordance with the present disclosure, there is provided an auxiliary power unit air bleed system with an expansion valve comprising a compressor having a bleed air discharge line; and an expansion valve fluidly coupled to the bleed air discharge line, wherein the expansion valve is configured to reduce a pressure of bleed air flowing through the bleed air discharge line and reduce a temperature of the bleed air.

Particular embodiments further may include at least one, or a plurality of, the following optional features, alone or in combination with each other:

A further embodiment of any of the foregoing embodiments may additionally and/or alternatively include the auxiliary power unit air bleed system with an expansion valve further comprising a controller in operative communication with the expansion valve.

A further embodiment of any of the foregoing embodiments may additionally and/or alternatively include the auxiliary power unit air bleed system with an expansion valve further comprising at least one sensor in operative communication with the bleed air discharge line and the controller.

A further embodiment of any of the foregoing embodiments may additionally and/or alternatively include the at least one sensor is configured as a pressure sensor or a temperature sensor.

A further embodiment of any of the foregoing embodiments may additionally and/or alternatively include the auxiliary power unit air bleed system with an expansion valve further comprising an anti-surge valve fluidly coupled to the bleed air discharge downstream from the compressor and upstream from the expansion valve.

A further embodiment of any of the foregoing embodiments may additionally and/or alternatively include the expansion valve is configured as a three-way actuated valve including the capacity as an expansion valve and an anti-surge valve.

A further embodiment of any of the foregoing embodiments may additionally and/or alternatively include the expansion valve is configured to cool the bleed air enabling the compressor to operate at a compression ratio from 4.5 to 10.

In accordance with the present disclosure, there is provided an auxiliary power unit air bleed system with an expansion valve comprising a main shaft coupled with a compressor and a turbine; a combustor fluidly coupled between the compressor and the turbine; a gearbox coupled to the main shaft; an electrical generator in operative communication with the gearbox; a bleed air discharge line fluidly coupled with the compressor; and an expansion valve fluidly coupled to the bleed air discharge line, wherein the expansion valve is configured to reduce a pressure of bleed air flowing through the bleed air discharge line and reduce a temperature of the bleed air.

Particular embodiments further may include at least one, or a plurality of, the following optional features, alone or in combination with each other:

A further embodiment of any of the foregoing embodiments may additionally and/or alternatively include the auxiliary power unit air bleed system with an expansion valve further comprising a controller in operative communication with the expansion valve.

A further embodiment of any of the foregoing embodiments may additionally and/or alternatively include the auxiliary power unit air bleed system with an expansion valve further comprising at least one sensor in operative communication with the bleed air discharge line and the controller.

A further embodiment of any of the foregoing embodiments may additionally and/or alternatively include the at least one sensor is configured as a pressure sensor or a temperature sensor.

A further embodiment of any of the foregoing embodiments may additionally and/or alternatively include the auxiliary power unit air bleed system with an expansion valve further comprising an anti-surge valve fluidly coupled to the bleed air discharge downstream from the compressor and upstream from the expansion valve.

A further embodiment of any of the foregoing embodiments may additionally and/or alternatively include the expansion valve is configured as a three-way actuated valve including the capacity as an expansion valve and an anti-surge valve.

In accordance with the present disclosure, there is provided a process for configuring an auxiliary power unit air bleed system with an expansion valve comprising fluidly coupling a compressor with a bleed air discharge line; fluidly coupling an expansion valve to the bleed air discharge line; reducing a pressure of bleed air flowing through the bleed air discharge line with expansion valve; and reducing a temperature of the bleed air flowing through the bleed air discharge line with the expansion valve.

Particular embodiments further may include at least one, or a plurality of, the following optional features, alone or in combination with each other:

A further embodiment of any of the foregoing embodiments may additionally and/or alternatively include the process further comprising coupling a controller in operative communication with the expansion valve.

A further embodiment of any of the foregoing embodiments may additionally and/or alternatively include the process further comprising coupling at least one sensor in operative communication with the bleed air discharge line and the controller, wherein the at least one sensor is configured as a pressure sensor or a temperature sensor.

A further embodiment of any of the foregoing embodiments may additionally and/or alternatively include the process further comprising an anti-surge valve fluidly coupled to the bleed air discharge downstream from the compressor and upstream from the expansion valve.

A further embodiment of any of the foregoing embodiments may additionally and/or alternatively include the process further comprising configuring the expansion valve as a three-way actuated valve including the capacity as an expansion valve and an anti-surge valve.

A further embodiment of any of the foregoing embodiments may additionally and/or alternatively include the process further comprising configuring the expansion valve to cool the bleed air; and enabling the compressor to operate at a compression ratio from 4.5 to 10.

A further embodiment of any of the foregoing embodiments may additionally and/or alternatively include the process further comprising configuring the expansion valve as a fixed diameter valve; and configuring the expansion valve as a passive valve.

Other details of the auxiliary power unit air bleed system with expansion valve are set forth in the following detailed description and the accompanying drawings wherein like reference numerals depict like elements.
Fig. 1 is a schematic representation of an exemplary auxiliary power unit with air bleed.
Fig. 2 is a schematic representation of another exemplary auxiliary power unit with air bleed.

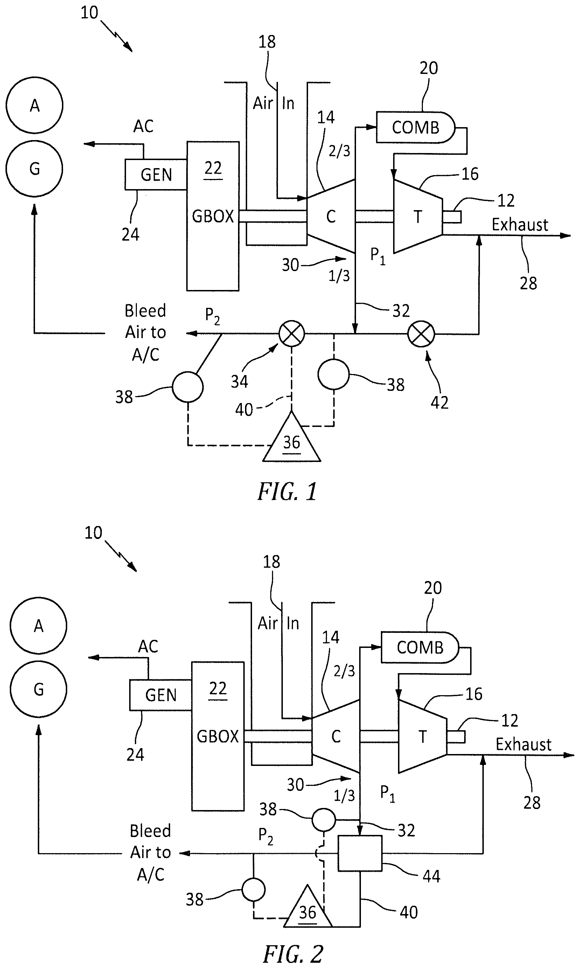

Referring to Fig. 1, there is illustrated an exemplary auxiliary power unit 10. The auxiliary power unit 10 includes a main shaft 12 supporting a compressor 14 and a turbine 16. The compressor 14 inputs energy into the air 18 while the turbine extracts energy from the expansion of gases provided downstream from a combustor 20. The main shaft 12 is mechanically coupled with a gearbox 22. The gearbox 22 provides rotary power to an electrical generator 24. The electrical generator 24 produces electrical energy AC for use in an aircraft A or main gas turbine engine G.

The air 18 is compressed in the compressor 14 and a portion is fed to the combustor 20 for thermal energy addition to the air 18. The combustor 20 products are discharged to the turbine 16 and utilized for imparting rotary energy to the turbine 16 and main shaft 12. The turbine exhaust 26 is discharged through an exhaust line 28.

Bleed air 30 is exhausted from the compressor 14 through a bleed air line 32. The bleed air 30 is fed to an expansion valve 34. The expansion valve 34 is configured to pass the bleed air 30 while removing thermal energy Q from the bleed air 30. The pressure P1 upstream of the expansion valve 34 is at a value higher than the pressure P2 downstream of the expansion valve 34. Thus, the pressure P2 becomes significantly lower than the pressure P1 employing the expansion valve 34. When the expansion valve 34 operates on the bleed air 30 flow the temperature of the bleed air 30 drops.

Since the expansion valve 34 is configured to lower the temperature of the bleed air 30, the compressor 14 can operate at much higher compression ratio. In an exemplary embodiment the compression ratio can range from 4.5 to 12. In another exemplary embodiment the compression ratio can range from 4.5 to 10. In another exemplary embodiment the compression ratio can range from 6.5 to 8.5.

The expansion valve 34 is in operative communication with a controller 36. The controller 36 may include hardware, firmware, and/or software components that are configured to perform the functions disclosed herein, including controlling the operation of the auxiliary power unit 10. While not specifically shown, the controller 36 may include other computing devices (e.g., servers, mobile computing devices, etc.) and computer systems which may be in communication with each other and/or the controller 36 via a communication network to perform one or more of the disclosed functions. The controller 36 may include at least one processor (e.g., a controller, microprocessor, microcontroller, digital signal processor, etc.), memory, and an input/output (I/O) subsystem. The controller 36 may be embodied as any type of computing device e.g., a server, an enterprise computer system, a network of computers, a combination of computers and other electronic devices, or other electronic devices.

The controller 36 can be in operative communication with sensors 38, such as a temperature sensor and/or pressure sensor. The controller 36 can provide control signals 40 to the expansion valve 34 in operation to adjust the expansion valve 34 position responsive to bleed air 30 temperature and pressure.

The expansion valve 34 can be designed as a fixed diameter valve and be configured as a passive valve in an exemplary embodiment.

An anti-surge valve 42 can be connected to the bleed air line 32 upstream of the expansion valve 34 and downstream of the compressor 14. The anti-surge valve 42 can be configured to open and discharge to the turbine exhaust line 28 in conditions when the expansion valve 34 is closed. The anti-surge valve 42 can prevent unwanted surge/overpressure conditions in the bleed air line 32.

Referring also to Fig. 2, the exemplary auxiliary power unit 10 is shown. The auxiliary power unit 10 is similar to the example in Fig. 1, except that the expansion valve 34 is configured as a three-way actuated valve 44. The three-way valve 44 can function as both the expansion valve 34 and anti-surge valve 42. The three-way actuated valve 44 can be configured to save weight for the system 10. The three-way actuated valve 44 can be operated similarly to the expansion valve 34 and function as the anti-surge valve 42.

A technical advantage of the disclosed auxiliary power unit air bleed system with expansion valve includes a capacity to remove thermal energy from the bleed air, thus enabling higher compression ratios.

Another technical advantage of the disclosed auxiliary power unit air bleed system with expansion valve includes combining the function of the expansion valve and anti-surge valve into a three-way actuated valve for weight reduction.

There has been provided an auxiliary power unit air bleed system with expansion valve. While the auxiliary power unit air bleed system with expansion valve has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. An auxiliary power unit air bleed system comprising:
a compressor having a bleed air discharge line; and
an expansion valve fluidly coupled to the bleed air discharge line, wherein the expansion valve is configured to reduce a pressure of bleed air flowing through the bleed air discharge line and reduce a temperature of the bleed air.

2. The auxiliary power unit air bleed system according to claim 1, further comprising:
a controller in operative communication with the expansion valve, the controller configured to control operation of at least the expansion valve.

3. The auxiliary power unit air bleed system according to claim 2, further comprising:
at least one sensor in operative communication with the bleed air discharge line and the controller.

4. The auxiliary power unit air bleed system according to claim 3, wherein the at least one sensor is configured as a pressure sensor or a temperature sensor.

5. The auxiliary power unit air bleed system according to any of claims 1 to 4, further comprising:
an anti-surge valve fluidly coupled to the bleed air discharge downstream from the compressor and upstream from the expansion valve.

6. The auxiliary power unit air bleed system according to any of claims 1 to 5, wherein the expansion valve is configured as a three-way actuated valve including the capacity as an expansion valve and an anti-surge valve.

7. The auxiliary power unit air bleed system according to any of claims 1 to 6, wherein the expansion valve is configured to cool the bleed air enabling the compressor to operate at a compression ratio from 4.5 to 10.

8. A gas turbine engine air bleed system comprising the auxiliary power unit air bleed system according to any of claims 1 to 7, the gas turbine engine air bleed system further comprising:
a main shaft coupled with the compressor and a turbine;
a combustor fluidly coupled between the compressor and the turbine;
a gearbox coupled to the main shaft; and
an electrical generator in operative communication with the gearbox;
wherein the bleed air discharge line is fluidly coupled with the compressor; and the expansion valve is fluidly coupled to the bleed air discharge line, wherein the expansion valve is configured to reduce a pressure of bleed air flowing through the bleed air discharge line and reduce a temperature of the bleed air.

9. A process for configuring an auxiliary power unit air bleed system comprising:
fluidly coupling a compressor with a bleed air discharge line;
fluidly coupling an expansion valve to the bleed air discharge line;
reducing a pressure of bleed air flowing through the bleed air discharge line with expansion valve; and
reducing a temperature of the bleed air flowing through the bleed air discharge line with the expansion valve.

10. The process of claim 9, further comprising:
coupling a controller in operative communication with the expansion valve.

11. The process of claim 10, further comprising:
coupling at least one sensor in operative communication with the bleed air discharge line and the controller, wherein the at least one sensor is configured as a pressure sensor or a temperature sensor.

12. The process of any of claims 9 to 11, further comprising:
coupling an anti-surge valve to the bleed air discharge downstream from the compressor and upstream from the expansion valve.

13. The process of any of claims 9 to 12, further comprising:
configuring the expansion valve as a three-way actuated valve including the capacity as an expansion valve and an anti-surge valve.

14. The process of any of claims 9 to 13, further comprising:
configuring the expansion valve to cool the bleed air; and
enabling the compressor to operate at a compression ratio from 4.5 to 10.

15. The process of any of claims 9 to 14, further comprising:
configuring the expansion valve as a fixed diameter valve; and
configuring the expansion valve as a passive valve.
